# EUROPÄISCHE PATENTSCHRIFT

(11) **EP 2 265 546 B1**
(45) Veröffentlichungstag und Bekanntmachung des Hinweises auf die Patenterteilung: **04.12.2013**
(21) Anmeldenummer: 09727868.3
(22) Anmeldetag: 31.03.2009
(51) Int. Cl.: C01B 33/029, C01B 33/04, C01B 33/107

(54) **VERFAHREN UND ANLAGE ZUR HERSTELLUNG VON REINSTSILIZIUM**
METHOD AND SYSTEM FOR THE PRODUCTION OF PURE SILICON
PROCÉDÉ ET INSTALLATION DESTINÉS À PRODUIRE DU SILICIUM ULTRA-PUR

(30) Priorität: 31.03.2008 DE 102008017304
(43) Veröffentlichungstag der Anmeldung: 29.12.2010
(73) Patentinhaber: Schmid Silicon Technology Gmbh, 72250 Freudenstadt (DE)
(72) Erfinder: SCHMID, Christian, 72250 Freudenstadt (DE); PETRIK, Adolf, 72250 Freudenstadt (DE); HAHN, Jochem, 72108 Rottenburg (DE)
(74) Vertreter: Patentanwälte Ruff, Wilhelm, Beier, Dauster & Partner
(86) Internationale Anmeldenummer: PCT/EP2009/002336
(87) Internationale Veröffentlichungsnummer: WO 2009/121558

(56) Entgegenhaltungen:
- WO-A-00/39027
- WO-A-02/48034
- WO-A-2007/039326
- US-A- 4 676 967

## Beschreibung

Die vorliegende Erfindung betrifft ein mehrstufiges Verfahren zur Herstellung von hochreinem Silizium sowie eine Anlage, in der ein solches Verfahren durchgeführt werden kann.

Hochreines Silizium wird in der Regel in einem mehrstufigen Prozess ausgehend von metallurgischem Silizium, das einen relativ hohen Anteil an Verunreinigungen aufweisen kann, hergestellt. Zum Steigern der Effizienz der Reinigung und zum Senken des spezifischen Energieaufwandes kann metallurgisches Silizium beispielsweise in ein Trihalogensilan überführt werden, das anschließend thermisch zu hochreinem Silizium zersetzt wird. Eine derartige Vorgehensweise ist beispielsweise aus der DE 29 19 086 bekannt. In anderen Verfahren, beispielsweise den in der WO 02/48034, der WO 00/39027, der WO 2007/039326 und der DE 33 11 650 beschriebenen, geht man bei der thermischen Zersetzung nicht etwa von einem Trihalogensilan aus, sondern vielmehr von Monosilan (SiH₄), das insbesondere durch Disproportionierung von Chlorsilanen erhalten werden kann. Die benötigten Chlorsilane werden dabei gemäß der DE 33 11 650 durch Reaktion von metallurgischem Silizium, Siliziumtetrachlorid und Wasserstoff bei 400 °C bis 600 °C gewonnen.

Alle bislang bekannten Verfahren haben den Nachteil, dass der Energieaufwand für den Gesamtprozess der Umwandlung von metallurgischem Silizium zu hochreinem Silizium außerordentlich hoch ist, was den Preis für hochreines Silizium insbesondere in den letzten Jahren mehr und mehr in die Höhe getrieben hat. Darüber hinaus weisen viele der bekannten Verfahren den Nachteil auf, dass sie im Hinblick auf das Entstehen und die Wieder- bzw. Weiterverwertung von Nebenprodukten nicht optimiert sind. Sowohl aus ökonomischen als auch aus ökologischen Gesichtspunkten weisen bekannte Verfahren insbesondere auch an diesem Punkt einen hohen Verbesserungsbedarf auf.

Der vorliegenden Erfindung liegt die Aufgabe zugrunde, eine optimierte technische Lösung zur Herstellung von hochreinem Silizium bereitzustellen, die im Hinblick auf die genannten Probleme auch den höchsten Anforderungen genügt.

Diese Aufgabe wird gelöst durch das Verfahren zur Herstellung von hochreinem Silizium mit den Merkmalen des Anspruchs 1 sowie die Anlage zur Herstellung von hochreinem Silizium mit den Merkmalen des Anspruchs 29. Bevorzugte Ausgestaltungen des erfindungsgemäßen Verfahrens finden sich in den Ansprüchen 2 bis 28. Bevorzugte Ausführungsformen der erfindungsgemäßen Anlage sind in den Ansprüchen 30 bis 36 angegeben. Der Wortlaut sämtlicher Ansprüche wird hiermit durch Bezugnahme zum Inhalt dieser Beschreibung gemacht.

Das erfindungsgemäße Verfahren zur Herstellung von hochreinem Silizium läßt sich im wesentlichen in drei Abschnitte gliedern, nämlich in einen Abschnitt (1), in dem die Herstellung von Trichlorsilan erfolgt, einen Abschnitt (2), in dem das in Abschnitt (1) hergestellte Trichlorsilan disproportioniert wird und einen Abschnitt (3), in dem das in Abschnitt (2) hergestellte Monosilan durch thermische Zersetzung in Silizium und Wasserstoff überführt wird.

Unter hochreinem Silizium soll im Rahmen der vorliegenden Anmeldung insbesondere Silizium verstanden werden, das unmittelbar in der Halbleiterindustrie, beispielsweise zur Herstellung von Solarzellen oder Microchips, weiterverarbeitet werden kann. Bei dem im Hydrochlorierungsprozess eingesetzten Silizium handelt es sich dagegen vorzugsweise um metallurgisches (Roh)Silizium, das noch in erheblichem Maße Verunreinigungen aufweist.

Besonders zeichnet sich ein erfindungsgemäßes Verfahren dadurch aus, dass Abschnitt (1) mindestens zwei zueinander parallele Prozesse umfasst, in denen jeweils eine trichlorsilanhaltige Reaktionsmischung erhalten wird. Zum einen umfasst Abschnitt (1) nämlich mindestens einen Hydrochlorierungsprozess, in dem Silizium mit Chlorwasserstoff in einem Hydrochlorierungsreaktor umgesetzt wird, zum anderen mindestens einen Konvertierungsprozess, in dem Siliziumtetrachlorid mit Silizium und Wasserstoff in einem Konvertierungsreaktor umgesetzt wird. Auch der Konvertierungsprozess umfasst eine Hydrochlorierung, nämlich die des eingesetzten Siliziums, im Unterschied zum Hydrochlorierungsprozess darüber hinaus aber eben auch die Umwandlung von Siliziumtetrachlorid. Das im Konvertierungsprozess eingesetzte Siliziumtetrachlorid stammt dabei mindestens teilweise aus Abschnitt (2). Die durch Disproportionierung des in Abschnitt (1) hergestellten Trichlorsilans erhaltene monosilanhaltige Reaktionsmischung enthält nämlich stets einen abtrennbaren Anteil an Siliziumtetrachlorid als Nebenprodukt.

Von der in der DE 33 11 650 beschriebenen Vorgehensweise hebt sich das erfindungsgemäße Verfahren entsprechend bereits dadurch ab, dass es einen Hydrochlorierungsschritt unter Verwendung von Chlorwasserstoff aufweist. Eine derartige Vorgehensweise wird in der DE 33 11 650 als energetisch ineffizient und schwer handhabbar beschrieben.

Die einzelnen Abschnitte (1) bis (3) des erfindungsgemäßen Verfahrens werden im folgenden detailliert beschrieben.

Neben dem erwähnten mindestens einen Hydrochlorierungsprozess und dem mindestens einen Konvertierungsprozess umfasst Abschnitt (1) des erfindungsgemäßen Verfahrens vorzugsweise auch mindestens einen Aufreinigungsprozess, in dem die trichlorsilanhaltige Reaktionsmischung, die in diesen Prozessen erhalten wird, aufgearbeitet, insbesondere von diversen Nebenprodukten befreit wird. Der mindestens eine Reinigungsprozess umfasst dabei vorzugsweise mindestens eine Trocken- und/oder mindestens eine Nassreinigungsstufe.

In der mindestens einen Trockenreinigungsstufe werden vorzugsweise in einem ersten Schritt die festen, grobkörnigen Bestandteile des Reaktionsgemisches abgetrennt. Die Trockenreinigungsstufe kann zu diesem Zweck einen oder mehrere Zyklone aufweisen. In einem zweiten Schritt werden feinkörnige Schwebeteilchen durch Filtration aus dem Reaktionsgemisch entfernt. Geeignete Zyklone und Filter hierfür sind dem Fachmann bekannt.

Es ist bevorzugt, dass die vorgenannten Reinigungschritte bei Temperaturen zwischen 170 °C und 220 °C, vorzugsweise zwischen 190 °C und 200 °C, erfolgen.

Auch die mindestens eine Nassreinigungsstufe umfasst vorzugsweise zwei Schritte. So hat es sich als besonders vorteilhaft erwiesen, in einem ersten Schritt eine Vorkühlung des aufzureinigenden Reaktionsgemisches vorzunehmen (ohne jedoch eine Totalkondensation desselben herbeizuführen). Eine solche Vorkühlung kann beispielsweise mittels eines geeigneten Gaswäschers, beispielsweise eines Venturi-Scrubbers, erfolgen. In einem zweiten Schritt können dann, beispielsweise mittels eines weiteren Venturi-Scrubbers, Verunreinigungen wie Chlorwasserstoff und Wasserstoff vom Reaktionsgemisch abgetrennt werden.

In bevorzugten Ausführungsformen des erfindungsgemäßen Verfahrens werden die aufgereinigten Reaktionsmischungen aus dem mindestens einen Hydrochlorierungsprozess und dem mindestens einen Konvertierungsprozess jeweils in einen Sammelbehälter überführt, in dem sie einige Zeit gelagert werden können, bis sich die Mischungen im chemischen Gleichgewicht befinden. Anschließend können sie gemischt und gemeinsam aufgearbeitet werden. In besonders bevorzugten Ausführungsformen können die Reaktionsmischungen aus dem mindestens einen Hydrochlorierungsprozess und dem mindestens einen Konvertierungsprozess auch bereits vor der Überführung in mindestens einen gemeinsamen Sammelbehälter gemischt werden.

Vorzugsweise wird beim Mischen der Reaktionsmischungen aus dem mindestens einen Hydrochlorierungsprozess und aus dem mindestens einen Konvertierungsprozess ein Mischungsverhältnis zwischen 10% und 50% bzw. zwischen 1:10 und 10:1 eingehalten. Besonders bevorzugt beträgt nach dem Mischen der Volumenanteil an Reaktionsmischung aus dem mindestens einen Konvertierungsprozess zwischen 50 % und 95 %, insbesondere zwischen 75 % und 95 %.

Neben den bereits angesprochenen Prozessen umfasst Abschnitt (1) bevorzugt mindestens einen thermischen Trennprozess, in dem die trichlorsilanhaltige Reaktionsmischung aus dem mindestens einen Hydrochlorierungsprozess und/oder dem mindestens einen Konvertierungsprozess mindestens teilweise in ihre Komponenten aufgetrennt wird. Der mindestens eine thermische Trennprozess ist bevorzugt dem mindestens einen Reinigungsprozess nachgeschaltet, so dass die trichlorsilanhaltigen Reaktionsmischungen aus den unterschiedlichen Prozessen nicht zwingend jeweils separat aufgetrennt werden müssen. Besonders bevorzugt erfolgt der mindestens eine thermische Trennprozess im Anschluss an die beschriebene Lagerung der aufgereinigten Reaktionsmischungen in den Sammelbehältern.

Neben Trichlorsilan enthalten die Reaktionsmischungen aus dem mindestens einen Hydrochlorierungs- und/oder dem mindestens einen Konvertierungsprozess in der Regel Monochlor-, Dichlor- und insbesondere auch Tetrachlorsilan. Insbesondere letzteres kann in dem mindestens einen thermischen Trennprozess in Abschnitt (1) gut abgetrennt werden. Bevorzugt wird es jedoch nach der Abtrennung nicht verworfen, sondern stattdessen in Abschnitt (1) wiederverwertet, insbesondere durch Einspeisung in den mindestens einen Konvertierungsprozess.

Die Hydrochlorierung des metallurgischen Siliziums in Anspruch 1 erfolgt vorzugsweise bei einer Temperatur zwischen 320 °C und 400 °C. Innerhalb dieses Bereiches sind Temperaturen zwischen 350 °C und 370 °C weiter bevorzugt.

Der Druck wird bei der Hydrochlorierung im Abschnitt (1) vorzugsweise auf einen Wert zwischen 2 at und 12 at eingestellt.

Besonders bevorzugt werden im Hydrochlorierungsprozess feine Siliziumteilchen als Ausgangsmaterial eingesetzt, vorzugsweise mit einem Durchmesser zwischen 0,4 mm und 3,3 mm, insbesondere mit einem Durchmesser zwischen 0,5 mm und 1,6 mm.

Die Konvertierung von Siliziumtetrachlorid in Abschnitt (1) erfolgt bevorzugt bei einer Temperatur zwischen 450 °C und 650 °C. Innerhalb dieses Bereiches ist eine Temperatur zwischen 500 °C und 600 °C weiter bevorzugt.

Der Druck wird bei der Konvertierung in Abschnitt (1) bevorzugt auf einen Wert zwischen 8 at und 15 at eingestellt.

Als Ausgangsmaterial wird dem Siliziumtetrachlorid bei der Konvertierung in Abschnitt (1) vorzugsweise pulverförmiges Silizium zugesetzt, insbesondere mit Siliziumteilchen, die einen Durchmesser zwischen 0,4 mm und 2,0 mm, insbesondere zwischen 0,5 und 2,0 mm, aufweisen.

In bevorzugten Ausführungsformen erfolgt die Konvertierung des Siliziumtetrachlorids in Abschnitt (1) unter katalytischen Bedingungen. Als Katalysatoren kommen insbesondere eisen- und/oder kupferhaltige Katalysatoren in Frage, wobei letztere bevorzugt eingesetzt werden. Als eisenhaltiger Katalysator eignet sich insbesondere metallisches Eisen (beispielsweise in Form von Eisenpulver) und noch besser metallisches Kupfer (beispielsweise in Form von Kupferpulver oder Kupfer-Flakes). Dieses kann mit dem im Konvertierungsprozess benötigten metallischen Silizium vorab gemischt werden, was sich in einigen Fällen als sehr günstig erwiesen hat.

Bei der Disproportionierung von Trichlorsilan in Abschnitt (2) fallen in der Regel neben Siliziumtetrachlorid als Nebenprodukte auch Monochlorsilan und Dichlorsilan an. Die Disproportionierung des Trichlorsilans selbst erfolgt im Rahmen des erfindungsgemäßen Verfahrens in Abschnitt (2) bevorzugt in einem heterogenen System aus flüssigen und gasförmigen Edukten, Produkten sowie gegebenenfalls weiteren beteiligten Stoffen wie z.B. Katalysatoren. Ein solches System ist beispielsweise in der DE 25 07 864 beschrieben. Die Gasphase besteht dabei überwiegend aus Chlorsilan-Dämpfen und einer (unter Prozessbedingungen) nicht kondensierbaren Phase Monosilan. Dieses reichert sich gemeinsam mit anderen leichteren Phasen kontinuierlich im oberen Teil des Systems an, während schwerere Phasen wie Siliziumtetrachlorid kontinuierlich absinken. Die Disproportionierung des Trichlorsilans im Abschnitt (2) erfolgt also bevorzugt unter Nichtgleichgewichtsbedingungen.

Wie oben beschrieben, wird bei der Disproportionierung anfallendes Siliziumtetrachlorid bevorzugt mindestens teilweise in Abschnitt (1), insbesondere in den Konvertierungsprozess in Abschnitt (1), rücküberführt, wo es dann mit Silizium und Wasserstoff umgesetzt werden kann.

Besonders bevorzugt handelt es sich bei der Disproportionierungsreaktion um eine katalytische Reaktion an einem Feststoff. Vorliegend ist es entsprechend bevorzugt, dass die Disproportionierung an einem festen, organischen Katalysator erfolgt. Bei dem Katalysator handelt es sich in bevorzugten Ausführungsformen um ein schwach basisches, makroporöses Anionenaustauschharz mit Aminogruppen, insbesondere mit tertiären Aminogruppen oder Dimetallaminogruppen.

Vorzugsweise erfolgt die Disproportierung des in Abschnitt (1) hergestellten Trichlorsilans in mindestens einem Disproportierungsreaktor, insbesondere in mindestens einer Kolonne, der bzw. die bevorzugt zu mindestens 50 %, insbesondere zu 75 bis 85 %, mit dem angesprochenen festen organischen Katalysator gefüllt ist. Als besonders vorteilhaft erwiesen hat es sich, wenn der untere Teil des mindestens einen Disproportionierungsreaktors mindestens teilweise mit einem makroporösen, Phenylpyridin-basierten, stark basischen Anionenaustauschharz als Katalysator befüllt wurde.

Damit die Disproportierung des Trichlorsilans in dem mindestens einen Disproportierungsreaktor problemlos ablaufen kann, ist es sehr wichtig, dass der im Disproportionierungsreaktor fixierte Katalysator möglichst wasserfrei eingesetzt wird. Bereits geringe Anteile Wasser im Katalysator können eine Hydrolyse des Trichlorsilans am Katalysator zur Folge haben, was wiederum Folgeprobleme wie Korrosion und die Neutralisation basischer Katalysatorfunktionen durch Hydrolyseprodukte wie Chlorwasserstoff und evtl. sogar Vergiften des Katalysators nach sich ziehen kann. Es ist daher erfindungsgemäß bevorzugt, dass der Katalysator vor Ingebrauchnahme in dem mindestens einen Disproportierungsreaktor mit Alkohol, insbesondere mit Ethanol und/oder Methanol, in Kontakt gebracht wird. Der Alkohol kann anschließend durch Evakuieren und/oder mittels Inertgas entfernt werden. Gegebenenfalls vorhandenes Restwasser wird dem Katalysator dabei entzogen.

Die Disproportionierung des Trichlorsilans erfolgt bevorzugt bei einer Temperatur zwischen 60 °C und 120 °C. In dem mindestens einen Disproportionierungsreaktor, insbesondere in der mindestens einen Disproportierungskolonne, wird dabei vorzugsweise ein Temperaturgradient eingestellt. Innerhalb des mindestens einen Disproportionierungsreaktors soll der Temperaturgradient bevorzugt 10 °C / m (bezogen auf die Höhe des Reaktors) betragen.

Wie der mindestens eine Konvertierungsprozess und der mindestens eine Hydrochlorierungsprozess in Abschnitt (1) erfolgt auch die Disproportionierung des Trichlorsilans in Abschnitt (2) bevorzugt bei erhöhten Drücken, insbesondere bei einem Druck zwischen 2 at und 10 at.

Neben der Disproportionierung umfasst Abschnitt (2) vorzugsweise mindestens noch einen thermischen Trennprozess, in dem die bei der Disproportionierung anfallende monosilanhaltige Reaktionsmischung mindestens teilweise in ihre Komponenten aufgetrennt wird. Neben Monosilan erhält man dabei insbesondere auch Chlorsilane, insbesondere Monochlorsilan, Dichlorsilan, Trichlorsilan und gegebenenfalls auch noch Siliziumtetrachlorid. Letzteres kann, wie das unmittelbar bei der Disproportionierung anfallende Siliziumtetrachlorid, mindestens teilweise in Abschnitt (1), insbesondere in den Konvertierungsprozess in Abschnitt (1), rücküberführt werden.

Konsequenterweise ist es erfindungsgemäß bevorzugt, dass analog zu dieser Vorgehensweise auch das bei der Auftrennung der Reaktionsmischung in dem mindestens einen thermischen Trennprozess anfallende Monochlor-, Dichlor- und Trichlorsilan wiederverwertet wird. Diese Nebenprodukte werden in bevorzugten Ausführungsformen zur erneuten Umsetzung in den Disproportionierungsreaktor in Abschnitt (2) eingespeist.

Die thermische Zersetzung des Monosilans in Abschnitt (3) erfolgt bevorzugt in mindestens einem Zersetzungsreaktor, in dem das Monosilan mit mindestens einem auf 800 °C bis 1.450 °C Oberflächentemperatur erhitzten Träger in Kontakt gebracht wird.

Bei dem mindestens einen Träger kann es sich beispielsweise um Stäbe, Rohre oder Platten aus vorzugsweise hochreinem Silizium oder einem anderen, Silizium nicht verunreinigenden Material handeln.

Das Monosilan wird bevorzugt als Gemisch mit einem Trägergas in den mindestens einen Zersetzungsreaktor eingespeist. Bei dem Trägergas handelt es sich besonders bevorzugt um Wasserstoff, wobei grundsätzlich aber auch Inertgase wie Stickstoff oder Mischungen derselben mit Wasserstoff als Trägergas in Frage kommen. Der Anteil an Monosilan in dem Gemisch mit dem Trägergas wird vorzugsweise auf einen Wert zwischen 0,5 mol-% und 15 mol-%, insbesondere zwischen 0,5 mol-% und 10 mol-%, eingestellt.

Besonders bevorzugt zeichnet sich ein erfindungsgemäßes Verfahren dadurch aus, dass die thermische Zersetzung des Monosilans in mindestens einem Zersetzungsreaktor erfolgt, durch den ein Gemisch aus Monosilan und Trägergas im Kreislauf geführt wird, wobei bevorzugt als Trägergas der im Pyrolyseprozess entstehende Wasserstoff genutzt wird.

Die Kreislaufführung des Gemisches erfolgt vorzugsweise unter den Bedingungen einer Zwangskonvektion. Es wurde gefunden, dass unter derartigen Bedingungen die Rate bzw. die spezifische Geschwindigkeit der Siliziumabscheidung auf dem mindestens einen Träger signifikant erhöht werden kann, beispielsweise um den Faktor 2, was unmittelbar eine Absenkung des Energieverbrauchs und vorteilhaft eine erhebliche Steigerung der Ausbeute an abgelagertem Silizium pro Zeiteinheit zur Folge hat. Darüber hinaus wurde festgestellt, dass auch das Entstehen von Nebenprodukten wie beispielsweise Polysilane signifikant minimiert werden konnte.

Ein Großteil des Gemisches, das den Zersetzungsreaktor passiert hat, wird dazu in bevorzugten Ausführungsformen des erfindungsgemäßen Verfahrens in die Speiseleitung des Zersetzungsreaktors rückgeführt, insbesondere nachdem das Gemisch abgekühlt und filtriert wurde, um gegebenenfalls mitgeführtes feines Siliziumpulver zu entfernen.

Als Zersetzungsreaktor kann ein optimierter klassischer Reaktor mit geeigneten, fachüblichen Mitteln zum Erhitzen der Träger und Kühlmitteln zum Kühlen der entsprechenden Konstruktionsbaugruppen bzw. des Außenmantels verwendet werden.

Die Zersetzung kann grundsätzlich sowohl bei Atmosphärendruck als auch bei erhöhtem Druck, z. B. bei Drücken bis zu 10 bar, durchgeführt werden. Die erwähnte Zwangskonvektion des Gasgemisches wird insbesondere durch einen Hochdruckventilator gewährleistet, der mit einer Durchsatzregelung versehen ist und dem in bevorzugten Ausführungsformen unmittelbar ein Filter vorgeschaltet ist.

In besonders bevorzugten Ausführungsformen des erfindungsgemäßen Verfahrens wird mindestens ein Teil des Gemisches aus Monosilan und Trägergas nach dem Passieren des mindestens einen Zersetzungsreaktors aus dem Kreislauf abgetrennt und in Abschnitt (1), insbesondere in den Konvertierungsprozess für Trichlorsilan in Abschnitt (1), rücküberführt.

Wie oben bereits erwähnt, ist auch eine Anlage zur Herstellung von hochreinem Silizium Gegenstand der vorliegenden Erfindung. Eine solche Anlage umfasst eine Produktionseinheit (1) zur Herstellung von Trichlorsilan, eine weitere Einheit (2) zur Herstellung von Monosilan durch Disproportionierung des in Einheit (1) hergestellten Trichlorsilans und eine Einheit (3) zur thermischen Zersetzung des hergestellten Monosilans in Silizium und Wasserstoff.

Einheit (1) weist dabei mehrere Komponenten auf, nämlich mindestens einen Hydrochlorierungsreaktor, mindestens einen Konvertierungsreaktor, mindestens einen Sammelbehälter und mindestens eine Trennvorrichtung. Wie aus obigen Ausführungen ja bereits hervorgeht, muss sich der mindestens eine Hydrochlorierungsreaktor für die Umsetzung von Silizium mit Chlorwasserstoff unter Erhalt einer trichlorsilanhaltigen Reaktionsmischung eignen. Das gleiche Produkt wird auch in dem mindestens einen Konvertierungsreaktor erhalten, der sich analog für eine Umsetzung von Siliziumtetrachlorid mit Silizium und Wasserstoff eignen muß. Geeignete Reaktoren sind dem Fachmann bekannt.

In dem mindestens einen Sammelbehälter können die bei der Hydrochlorierung und bei der Konvertierung hergestellten trichlorsilanhaltigen Reaktionsmischungen gemischt und gelagert werden. In der mindestens einen Trennvorrichtung, die dem mindestens einen Sammelbehälter vorzugsweise nachgeschaltet ist, können die trichlorsilanhaltigen Reaktionsmischungen mindestens teilweise in ihre Komponenten aufgetrennt werden, was ja ebenfalls bereits oben beschrieben wurde. Das aus verschiedenen Chlorsilanen bestehende Kondensat durchläuft also ein Stadium der chemischen Stabilisierung, also Ausformung stabiler chemischer Zustände, der Beimengungen bei Temperaturen im Bereich zwischen +20°C und -50°C, vorzugsweise im Bereich zwischen +10°C und -20°C innnerhalb eines Zeitraumes von 2 bis 8 Tagen, vorzugsweise innerhalb von 5 Tagen. Nach einem derartigen Stabilisierungsstadium werden die Chlorsilane aus den Prozessen der Hydrochlorierung und der Konvertierung in mindestens einem Behälter zusammengeführt und anschließend zur Trennung der Komponenten weitergeleitet, wo das Gemisch mindestes in die Hauptprodukte Trichlorsilan, und Tetrachlorsilan aufgespalten wird.

Einheit (2) weist als Komponenten mindestens einen Disproportionierungsreaktor und mindestens eine Trennvorrichtung auf. Die mindestens eine Trennvorrichtung dient insbesondere zur Abtrennung von Chlorsilanen aus der monosilanhaltigen Reaktionsmischung, wie bereits oben erwähnt. Der mindestens eine Disproportionierungsreaktor muß dazu geeignet sein, dass in ihm Trichlorsilan aus Einheit (1) vorzugsweise unter katalytischen Bedingungen zu einer monosilanhaltigen Reaktionsmischung umgesetzt werden kann. Auch derartige Disproportionierungsreaktoren sind dem Fachmann bekannt, beispielsweise aus der DE 10 2005 046 105.

Einheit (3) umfasst unter anderem mindestens einen Zersetzungsreaktor. Wie bereits erwähnt, wird in diesem Monosilan aus Einheit (2) gemischt mit einem Trägergas mit mindestens einem auf 800 °C bis 1.450 °C Oberflächentemperatur erhitzten Träger in Kontakt gebracht.

Darüber hinaus zeichnet sich eine erfindungsgemäße Anlage insbesondere dadurch aus, dass Einheit (2) mit Einheit (1) über mindestens eine Rückführungsleitung verbunden ist, so dass in Einheit (2) anfallendes Siliziumtetrachlorid in den Konvertierungsreaktor in Einheit (1) eingespeist werden kann.

In bevorzugten Ausführungsformen ist die mindestens eine Trennvorrichtung in Einheit (1) über mindestens eine Rückführungsleitung mit dem mindestens einen Konvertierungsreaktor in Einheit (1) verbunden. Dadurch kann in der mindestens einen Trennvorrichtung in Einheit (1) abgetrenntes Siliziumtetrachlorid in den mindestens einen Konvertierungsreaktor in Einheit (1) eingespeist werden.

Die mindestens eine Trennvorrichtung in Einheit (2) kann in bevorzugten Ausführungsformen der erfindungsgemäßen Anlage über mindestens eine Rückführungsleitung mit dem mindestens einen Disproportionierungsreaktor in Einheit (2) verbunden sein. Dies ermöglicht die Einspeisung von in der mindestens einen Trennvorrichtung in Einheit (2) abgetrenntem Monochlor-, Dichlor- und/oder Trichlorsilan zur erneuten Umsetzung in den mindestens einen Disproportionierungsreaktor.

Der mindestens eine Zersetzungsreaktor in Einheit (3) ist bevorzugt über mindestens eine Rückführungsleitung mit Einheit (1), insbesondere mit dem mindestens einen Konvertierungsreaktor in Einheit (1) verbunden. Dies ist insbesondere dann von Vorteil, wenn Wasserstoff als Trägergas bei der thermischen Zersetzung des Monosilans verwendet wird. Der entstehende Wasserstoff kann so vollständig innerhalb des erfindungsgemäßen Verfahrens bzw. innerhalb der erfindungsgemäßen Anlage wiederverwertet werden.

Die mindestens eine Trennvorrichtung in Einheit (1) und/oder die mindestens eine Trennvorrichtung in Einheit (2) umfasst vorzugsweise mindestens eine Destillations- bzw. Rektifikationskolonne.

Bei dem mindestens einen Disproportionierungsreaktor handelt es sich insbesondere um mindestens eine Kolonne, insbesondere um eine Kolonne, die zu 75 bis 85 % mit einem festen organischen Katalysator befüllt ist. Dieser wurde im Rahmen des erfindungsgemäßen Verfahrens bereits erwähnt. Auf die entsprechenden Beschreibungsteile wird hiermit Bezug genommen und verwiesen.

Einheit (3) ist vorzugsweise derart ausgestaltet, dass das erwähnte Gemisch aus Monosilan und Trägergas im Kreislauf durch den mindestens einen Zersetzungsreaktor geführt werden kann. In Weiterbildung ist es bevorzugt, dass Einheit (3) mindestens ein Mittel, bevorzugt mindestens einen Ventilator, aufweist, durch das bzw. durch den eine Zwangskonvektion in dem Kreislauf gewährleistet werden kann. Bevorzugt weist Einheit (3) Regel- und Steuerungsmittel auf, mit denen der Anteil an Monosilan im Trägergas sowie die Geschwindigkeit der Konvektion gezielt eingestellt werden kann. Ein geeigneter Zersetzungsreaktor ist beispielsweise in der EP 0 181 803 beschrieben.

Weitere Merkmale der Erfindung ergeben sich aus der nachfolgenden Beschreibung von bevorzugten Ausführungsformen in Verbindung mit den Unteransprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

In den Zeichnungen zeigen:

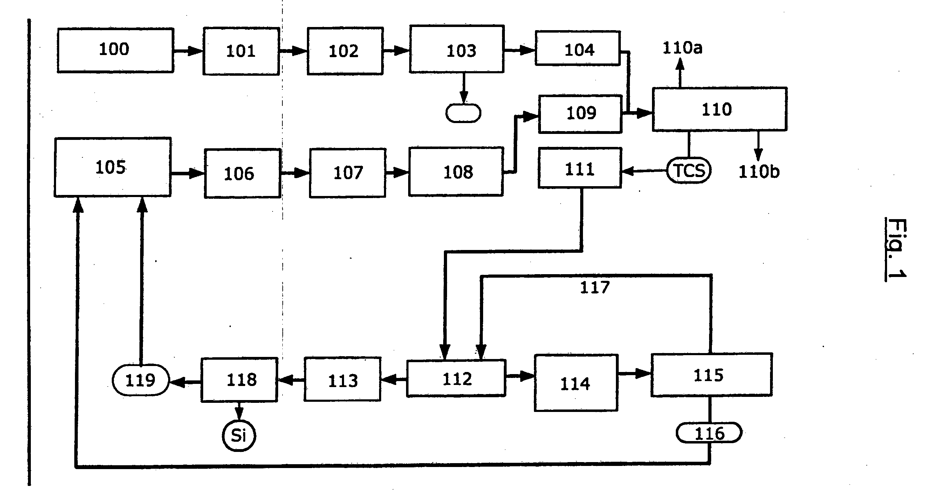

- Fig. 1:: Fliessbild einer Ausführungsform des erfindungsgemäßen Verfahrens zur Herstellung von hochreinem Silizium.

In **Fig. 1** ist eine Ausführungsform des erfindungsgemäßen Verfahrens zur Herstellung von hochreinem Silizium dargestellt. Das Verfahren ist in drei Abschnitte unterteilt, nämlich die Herstellung von Trichlorsilan, die Herstellung von Monosilan durch Disproportionierung des hergestellten Trichlorsilans und die thermische Zersetzung des hergestellten Monosilans.

In einem Hydrochlorierungsreaktor **100** wird Silizium mit Chlorwasserstoff unter Erhalt einer trichlorsilanhaltigen Reaktionsmischung umgesetzt. Die erhaltene Reaktionsmischung wird danach in einer Trockenreinigungsstufe **101** und einer Nassreinigungsstufe **102** behandelt, um insbesondere feste und wasserlösliche Verunreinigungen weitestgehend abzutrennen. In der Station **103** wird die Reaktionsmischung anschließend kondensiert und dann zur Zwischenlagerung in den Sammelbehälter **104** überführt.

Parallel zur Herstellung von Trichlorsilan durch die Hydrochlorierung im Reaktor **100** wird auch im Konvertierungsreaktor **105** Trichlorsilan produziert. Hier wird Siliziumtetrachlorid mit Silizium und Wasserstoff unter Erhalt einer trichlorsilanhaltigen Reaktionsmischung umgesetzt. Diese wird analog zu der durch Hydrochlorierung erhaltenen Reaktionsmischung in einer Trockenreinigungsstufe **106** und einer Nassreinigungsstufe **107** behandelt. Es folgt eine Kondensation der gereinigten Reaktionsmischung in Station **108** sowie eine anschließende Zwischenlagerung im Sammelbehälter **109**.

Nach Zwischenlagerung in den Sammelbehältern **104** und **109** werden die Reaktionsmischungen gemischt und in die Trennvorrichtung **110** überführt, in der sie mindestens teilweise in ihre Komponenten aufgetrennt werden. Hoch- und tiefsiedende Nebenprodukte werden über die Auslässe **110a** und **110b** abgeführt. Über eine Rückführungsleitung (nicht dargestellt) wird abgetrenntes Siliziumtetrachlorid in den einen Konvertierungsreaktor **105** eingespeist. Das aufgereinigte Trichlorsilan (TCS) wird dagegen zur Weiterverarbeitung in den Sammelbehälter **111** überführt.

Im Disproportionierungsreaktor **112** wird das aufgereinigte Trichlorsilan anschließend unter katalytischen Bedingungen zu einer monosilanhaltigen Reaktionsmischung umgesetzt. Niedrigsiedende Fraktionen mit hohem Anteil an Monosilan werden während der Disproportionierung kontinuierlich aus dem Disproportionierungsreaktor abgeführt und in der Station **113** aufgereinigt. Höhersiedende Fraktionen mit hohem Anteil an Siliziumtetrachlorid und Trichlorsilan werden aus dem Disproportionierungsreaktor über den Sammelbehälter **114** in die Trennvorrichtung **115** überführt. Über die Rückführungsleitung **116** wird aus dieser abgetrennttes Siliziumtetrachlorid in den einen Konvertierungsreaktor **105** eingespeist. Abgetrenntes Trichlorsilan wird dagegen über die Rückführungsleitung **117** wieder in den Disproportionierungsreaktor **112** eingeleitet.

Das bei der Disproportionierung gewonnene Monosilan wird unmittelbar in den Zersetzungsreaktor **118** überführt und als Gemisch mit Wasserstoff als Trägergas in diesem mit auf 800 °C - 1450 °C (Oberflächentemperatur) erhitzten Trägern in Kontakt gebracht. Das in dem Reaktor abgeschiedene Silizium kann relativ leicht abgetrennt werden. Mindestens ein Teil des Gemisches wird nach dem Passieren des Zersetzungsreaktors **118** über die Rückführungsleitung **119** in den Konvertierungsreaktor **105** rückgeführt.

## Patentansprüche

1. Verfahren zur Herstellung von hochreinem Silizium, umfassend ^ die Abschnitte
(1) Herstellung von Trichlorsilan,
(2) Herstellung von Monosilan durch Disproportionierung des in Abschnitt (1) hergestellten Trichlorsilans, wobei eine monosilanhaltige Reaktionsmischung erhalten wird, die Siliziumtetrachlorid als Nebenprodukt enthält, und
(3) thermische Zersetzung des so hergestellten Monosilans in Silizium und Wasserstoff,
**dadurch gekennzeichnet, dass** zur Herstellung des Trichlorsilans in Abschnitt (1) in mindestens einem Hydrochlorierungsprozess Silizium mit Chlorwasserstoff in einem Hydrochlorierungsreaktor und parallel dazu in mindestens einem Konvertierungsprozess in Abschnitt (2) als Nebenprodukt anfallendes Siliziumtetrachlorid mit Silizium und Wasserstoff in einem Konvertierungsreaktor zu einer *jeweils* trichlorsilanhaltigen Reaktionsmischung umgesetzt wird.

2. Verfahren nach Anspruch 1, **dadurch gekennzeichnet, dass** die aufgereinigten Reaktionsmischungen aus dem mindestens einen Hydrochlorierungsprozess und dem mindestens einen Konvertierungsprozess gemischt und in mindestens einen gemeinsamen Sammelbehälter überführt werden, wobei es bevorzugt ist, dass das Mischungsverhältnis der Reaktionsmischungen aus dem mindestens einen Hydrochlorierungsprozess und dem mindestens einen Konvertierungsprozess zwischen 1:10 und 10:1 eingestellt wird.

3. Verfahren nach einem der Ansprüche 1 oder 2, **dadurch gekennzeichnet, dass** Abschnitt (1) mindestens einen thermischen Trennprozess umfasst, der vorzugsweise dem mindestens einen Reinigungsprozess nachgeschaltet ist, in dem die trichlorsilanhaltige Reaktionsmischung aus dem mindestens einen Hydrochlorierungsprozess und/oder dem mindestens einen Konvertierungsprozess mindestens teilweise in ihre Komponenten aufgetrennt wird wobei es bevorzugt ist, dass in dem mindestens einen thermischen Trennprozess abgetrenntes Siliziumtetrachlorid in den mindestens einen Konvertierungsprozess in Abschnitt (1) eingespeist wird.

4. Verfahren nach einem der vorhergehenden Ansprüche, **dadurch gekennzeichnet, dass** der mindestens eine Hydrochlorierungsprozess bei einer Temperatur zwischen 320 °C und 400 °C sowie bevorzugt bei einem Druck zwischen 2 bar und 12 bar erfolgt.

5. Verfahren nach einem der vorhergehenden Ansprüche, **dadurch gekennzeichnet, dass** der mindestens eine Konvertierungsprozess bei einer Temperatur zwischen 450 °C und 650 °C sowie bevorzugt bei einem Druck zwischen 8 und 15 at erfolgt.

6. Verfahren nach einem der vorhergehenden Ansprüche, **dadurch gekennzeichnet, dass** im mindestens einen Konvertierungsprozess eisenhaltiges Silizium umgesetzt wird.

7. Verfahren nach einem der vorhergehenden Ansprüche, **dadurch gekennzeichnet, dass** die Disproportionierung des Trichlorsilans im Abschnitt (2) unter Nichtgleichgewichtsbedingungen erfolgt.

8. Verfahren nach einem der vorhergehenden Ansprüche, **dadurch gekennzeichnet, dass** die Disproportionierung an einem festen organischen Katalysator erfolgt, wobei es bevorzugt ist, dass die Disproportionierung des in Abschnitt (1) hergestellten Trichlorsilans in mindestens einem Disproportionierungsreaktor, insbesondere in mindestens einer Kolonne, erfolgt, der bzw. die bevorzugt zu 75 - 85 % mit dem festen organischen Katalysator gefüllt ist.

9. Verfahren nach einem der vorhergehenden Ansprüche, **dadurch gekennzeichnet, dass** die Disproportionierung bei Temperaturen im Bereich zwischen 60 °C und 120 °C erfolgt sowie bevorzugt bei einem Druck zwischen 2 at und 10 at durchgeführt wird.

10. Verfahren nach einem der vorhergehenden Ansprüche, **dadurch gekennzeichnet, dass** Abschnitt (2) mindestens einen thermischen Trennprozess umfasst, in dem die bei der Disproportionierung anfallende monosilanhaltige Reaktionsmischung mindestens teilweise in ihre Komponenten aufgetrennt wird, wobei es bevorzugt ist, dass bei der Auftrennung der Reaktionsmischung anfallendes Monochlor-, Dichlor- und Trichlorsilan zur erneuten Umsetzung in den mindestens einen Disproportionierungsreaktor eingespeist wird.

11. Verfahren nach einem der vorhergehenden Ansprüche, **dadurch gekennzeichnet, dass** die thermische Zersetzung des Monosilans in Abschnitt (3) in mindestens einem Zersetzungsreaktor erfolgt, in dem das Monosilan mit mindestens einem auf 800 °C - 1450 °C (Oberflächentemperatur) erhitzten Träger in Kontakt gebracht wird, wobei es bevorzugt ist, dass das Monosilan als Gemisch mit einem Trägergas in den mindestens einen Zersetzungsreaktor eingespeist wird, und wobei es bevorzugt ist, dass das Gemisch im Kreislauf durch den mindestens einen Zersetzungsreaktor geführt wird.

12. Verfahren nach Anspruch 11, **dadurch gekennzeichnet, dass** mindestens ein Teil des Gemisches nach dem Passieren des mindestens einen Zersetzungsreaktors aus dem Kreislauf ausgeschieden und in Abschnitt (1), insbesondere in den Konvertierungsprozess in Abschnitt (1), rückgeführt wird.

13. Anlage zur Herstellung von hochreinem Silizium, insbesondere nach einem Verfahren nach einem der vorhergehenden Ansprüche, umfassend eine Produktionseinheit (1) zur Herstellung von Trichlorsilan, eine weitere Einheit (2) zur Herstellung von Monosilan durch Disproportionierung des in Einheit (1) hergestellten Trichlorsilans und eine Einheit (3) zur thermischen Zersetzung des hergestellten Monosilans zu Silizium und Wasserstoff, Einheit (1) mit
• mindestens einem Hydrochlorierungsreaktor, in dem Silizium mit Chlorwasserstoff unter Erhalt einer trichlorsilanhaltigen Reaktionsmischung umgesetzt werden kann,
• mindestens einem Konvertierungsreaktor, in dem Siliziumtetrachlorid mit Silizium und Wasserstoff unter Erhalt einer trichlorsilanhaltigen Reaktionsmischung umgesetzt werden kann,
• mindestens einem Sammelbehälter, in dem die hergestellten trichlorsilanhaltigen Reaktionsmischungen gemischt und gelagert werden können und
• mindestens einer Trennvorrichtung, die vorzugsweise dem mindestens einen Sammelbehälter nachgeschaltet ist, in der die trichlorsilanhaltige Reaktionsmischung mindestens teilweise in ihre Komponenten aufgetrennt werden kann,
Einheit (2) mit
• mindestens einem Disproportionierungsreaktor, in dem Trichlorsilan aus Einheit (1) unter katalytischen Bedingungen zu Siliziumtetrachlorid und einer monosilanhaltigen Reaktionsmischung umgesetzt werden kann und
• mindestens einer Trennvorrichtung, in der Chlorsilane aus der monosilanhaltigen Reaktionsmischung abgetrennt werden können,
Einheit (3) mit
• mindestens einem Zersetzungsreaktor, in dem Monosilan aus Einheit (1) mit mindestens einem auf 800 °C - 1450 °C (Oberflächentemperatur) erhitzten Träger in Kontakt gebracht werden kann,
wobei Einheit (2) mit Einheit (1) über mindestens eine Rückführungsleitung verbunden ist, über die in Einheit (2) anfallendes Siliziumtetrachlorid in den mindestens einen Konvertierungsreaktor in Einheit (1) eingespeist werden kann.

14. Anlage nach Anspruch 13, **dadurch gekennzeichnet, dass** die mindestens eine Trennvorrichtung in Einheit (1) über mindestens eine Rückführungsleitung mit dem mindestens einen Konvertierungsreaktor in Einheit (1) verbunden ist, so dass in der mindestens einen Trennvorrichtung in Einheit (1) abgetrenntes Siliziumtetrachlorid in den mindestens einen Konvertierungsreaktor in Einheit (1) eingespeist werden kann.

15. Anlage nach einem der Ansprüche 13 oder 14, **dadurch gekennzeichnet, dass** die mindestens eine Trennvorrichtung in Einheit (2) über mindestens eine Rückführungsleitung mit dem mindestens einen Disproportionierungsreaktor in Einheit (2) verbunden ist, so dass in der mindestens einen Trennvorrichtung in Einheit (2) abgetrennte Chlorsilane zur erneuten Umsetzung in den mindestens einen Disproportionierungsreaktor eingespeist werden können und dass der mindestens eine Zersetzungsreaktor in Einheit (3) über mindestens eine Rückführungsleitung mit Einheit (1), insbesondere mit dem mindestens einen Konvertierungsreaktor in Einheit (1), verbunden ist.

## Claims

1. A method for producing high-purity silicon, comprising the sections
(1) preparation of trichlorosilane,
(2) preparation of monosilane by disproportionation of the trichlorosilane prepared in section (1) to give a monosilane-containing reaction mixture containing silicon tetrachloride as by-product, and
(3) thermal decomposition of the monosilane prepared in this way into silicon and hydrogen,
**characterized in that**,
to prepare the trichlorosilane in section (1), silicon is reacted with hydrogen chloride in at least one hydrochlorination process in a hydrochlorination reactor and, in parallel thereto, silicon tetrachloride obtained as by-product in section (2) is reacted with silicon and hydrogen in at least one converting process in a converting reactor to give an in each case trichlorosilane-containing reaction mixture.

2. The method according to claim 1, **characterized in that** the purified reaction mixtures from the at least one hydrochlorination process and the at least one converting process are mixed and transferred to at least one common collection vessel, wherein it is preferred that the mixing ratio of the reaction mixtures from the at least one hydrochlorination process and the at least one converting process is set to a value in the range from 1:10 to 10:1.

3. The method according to any one of the claims 1 or 2, **characterized in that** section (1) comprises at least one thermal separation process which is preferably downstream of the at least one purification process and in which the trichlorosilane-containing reaction mixture from the at least one hydrochlorination process and/or the at least one converting process is at least partially separated into its components, wherein it is preferred that silicon tetrachloride separated off in the at least one thermal separation process is fed into the at least one converting process in section (1).

4. The method according to any one of the preceding claims, **characterized in that** the at least one hydrochlorination process is carried out at a temperature in the range from 320°C to 400°C, and preferably at a pressure in the range from 2 bar to 12 bar.

5. The method according to any one of the preceding claims, **characterized in that** the at least one converting process is carried out at a temperature in the range from 450°C to 650°C, and preferably at a pressure in the range from 8 at to 15 at.

6. The method according to any one of the preceding claims, **characterized in that** iron-containing silicon is reacted in the at least one converting process.

7. The method according to any one of the preceding claims, **characterized in that** the disproportionation of the trichlorosilane in section (2) is carried out under nonequilibrium conditions.

8. The method according to any one of the preceding claims, **characterized in that** the disproportionation is carried out over a solid organic catalyst, wherein it is preferred that the disproportionation of the trichlorosilane prepared in section (1) is carried out in at least one disproportionation reactor, in particular in at least one column, which is preferably filled to an extent of 75-85 % with the solid organic catalyst.

9. The method according to any one of the preceding claims, **characterized in that** the disproportionation is carried out at temperatures in the range from 60 °C to 120 °C, and preferably at pressures in the range from 2 at to 10 at.

10. The method according to any one of the preceding claims, **characterized in that** section (2) comprises at least one thermal separation process in which the monosilane-containing reaction mixture obtained in the disproportionation is at least partially separated into its components, wherein it is preferred that monochlorosilane, dichlorosilane and trichlorosilane obtained in the separation of the reaction mixture is fed into the at least one disproportionation reactor for renewed reaction.

11. The method according to any one of the preceding claims, **characterized in that** the thermal decomposition of the monosilane in section (3) is carried out in at least one decomposition reactor in which the monosilane is brought into contact with at least one support heated to 800 °C-1450 °C (surface temperature), wherein it is preferred that the monosilane is fed in admixture with a carrier gas into the at least one decomposition reactor, and wherein it is preferred that the mixture is circulated through the at least one decomposition reactor.

12. The method according to claim 11, **characterized in that** at least part of the mixture is branched off from the circuit after passing through the at least one decomposition reactor and recirculated to section (1), in particular to the converting method in section (1).

13. A system for producing high-purity silicon, in particular by a process according to any one of the preceding claims, which comprises a production unit (1) for preparing trichlorosilane, a further unit (2) for preparing monosilane by disproportionation of the trichlorosilane prepared in unit (1) and a unit (3) for thermal decomposition of the monosilane prepared into silicon and hydrogen,
where unit (1) comprises
• at least one hydrochlorination reactor in which silicon can be reacted with hydrogen chloride to give a trichlorosilane-containing reaction mixture,
• at least one converting reactor in which silicon tetrachloride can be reacted with silicon and hydrogen to give a trichlorosilane-containing reaction mixture,
• at least one collection vessel in which the trichlorosilane-containing reaction mixtures prepared can be mixed and stored, and
• at least one separation apparatus which is preferably downstream of the at least one collection vessel and in which the trichlorosilane-containing reaction mixture can be at least partially separated into its components,
where unit (2) comprises
• at least one disproportionation reactor in which trichlorosilane from unit (1) can be converted under catalytic conditions to silicon tetrachloride and a monosilane-containing reaction mixture, and
• at least one separation apparatus in which chlorosilanes can be separated from the monosilane-containing reaction mixture,
where unit (3) comprises
• at least one decomposition reactor in which monosilane from unit (1) can be brought into contact with at least one support heated to 800 °C-1450 °C (surface temperature),
and unit (2) is connected to unit (1) via at least one return line via which silicon tetrachloride obtained in unit (2) can be fed into the at least one converting reactor in unit (1).

14. The system according to claim 13, **characterized in that** at least one separation apparatus in unit (1) is connected via at least one return line to the at least one converting reactor in unit (1), so that silicon tetrachloride which has been separated off in the at least one separation apparatus in unit (1) can be fed into the at least one converting reactor in unit (1).

15. The system according to any one of the claims 13 or 14, **characterized in that** the at least one separation apparatus in unit (2) is connected via at least one return line to the at least one disproportionation reactor in unit (2), so that chlorosilanes which have been separated off in the at least one separation apparatus in unit (2) can be fed into the at least one disproportionation reactor for renewed reaction, and **in that** the at least one decomposition reactor in unit (3) is connected via at least one return line to unit (1), in particular to the at least one converting reactor in unit (1).

## Revendications

1. Procédé pour la préparation de silicium de haute pureté, comprenant les sections
(1) préparation de trichlorosilane,
(2) préparation de monosilane par dismutation du trichlorosilane préparé dans la section (1), en obtenant un mélange réactionnel contenant du monosilane, qui contient du tétrachlorure de silicium comme produit secondaire, et
(3) décomposition thermique du monosilane ainsi préparé en silicium et hydrogène,
**caractérisé en ce que**, pour la préparation du trichlorosilane dans la section (1), on transforme, dans au moins un procédé d'hydrochloration, du silicium avec du chlorure d'hydrogène dans un réacteur d'hydrochloration et parallèlement à cette transformation, on transforme le tétrachlorure obtenu comme produit secondaire dans la section (2) dans au moins un procédé de conversion avec du silicium et de l'hydrogène dans un réacteur de conversion en un mélange réactionnel contenant à chaque fois du trichlorosilane.

2. Procédé selon la revendication 1, **caractérisé en ce que** les mélanges réactionnels purifiés dudit au moins un procédé d'hydrochloration et dudit au moins un procédé de conversion sont mélangés et transférés dans au moins un récipient collecteur commun, où il est préféré que le rapport de mélange des mélanges réactionnels dudit au moins un procédé d'hydrochloration et dudit au moins un procédé de conversion soit réglé entre 1:10 et 10:1.

3. Procédé selon l'une quelconque des revendications 1 ou 2, **caractérisé en ce que** la section (1) comprend au moins un procédé de séparation thermique, qui est de préférence disposé en aval dudit au moins un procédé de purification, dans lequel le mélange réactionnel contenant du trichlorosilane dudit au moins un procédé d'hydrochloration et/ou dudit au moins un procédé de conversion est séparé au moins partiellement en ses composants, où il est préféré que le tétrachlorure de silicium séparé dans ledit au moins un procédé de séparation thermique soit injecté dans ledit au moins un procédé de conversion dans la section (1).

4. Procédé selon l'une quelconque des revendications précédentes, **caractérisé en ce que** ledit au moins un procédé d'hydrochloration a lieu à une température entre 320°C et 400°C ainsi que de préférence à une pression entre 2 bars et 12 bars.

5. Procédé selon l'une quelconque des revendications précédentes, **caractérisé en ce que** ledit au moins un procédé de conversion a lieu à une température entre 450°C et 650°C ainsi que de préférence à une pression entre 8 et 15 atm.

6. Procédé selon l'une quelconque des revendications précédentes, **caractérisé en ce que** du silicium contenant du fer est transformé dans ledit au moins un procédé de conversion.

7. Procédé selon l'une quelconque des revendications précédentes, **caractérisé en ce que** la dismutation du trichlorosilane dans la section (2) a lieu dans des conditions de non-équilibre.

8. Procédé selon l'une quelconque des revendications précédentes, **caractérisé en ce que** la dismutation a lieu sur un catalyseur organique solide, où il est préféré que la dismutation du trichlorosilane préparé dans la section (1) ait lieu dans au moins un réacteur de dismutation, en particulier dans au moins une colonne, qui est/sont de préférence remplie(s) à raison de 75-85% par le catalyseur organique solide.

9. Procédé selon l'une quelconque des revendications précédentes, **caractérisé en ce que** la dismutation est réalisée à des températures dans la plage entre 60°C et 120°C ainsi que de préférence à une pression entre 2 atm et 10 atm.

10. Procédé selon l'une quelconque des revendications précédentes, **caractérisé en ce que** la section (2) comprend au moins un procédé de séparation thermique, dans lequel le mélange réactionnel contenant du monosilane obtenu lors de la dismutation est séparé au moins partiellement en ses composants, où il est préféré que le monochlorosilane, le dichlorosilane et le trichlorosilane obtenus lors de la séparation du mélange réactionnel soient injectés, pour une nouvelle transformation, dans ledit au moins un réacteur de dismutation.

11. Procédé selon l'une quelconque des revendications précédentes, **caractérisé en ce que** la décomposition thermique du monosilane dans la section (3) a lieu dans au moins un réacteur de décomposition, dans lequel le monosilane est mis en contact avec au moins un support chauffé à 800°C-1450°C (température de surface), où il est préféré que le monosilane soit injecté sous forme de mélange avec un gaz support dans ledit au moins un réacteur de décomposition et où il est préféré que le mélange soit guidé en circulation à travers ledit au moins un réacteur de décomposition.

12. Procédé selon la revendication 11, **caractérisé en ce qu'**au moins une partie du mélange est éliminée du circuit après le passage dudit au moins un réacteur de décomposition et recyclée dans la section (1), en particulier dans le procédé de conversion dans la section (1).

13. Installation pour la préparation de silicium de haute pureté, en particulier selon un procédé selon l'une quelconque des revendications précédentes, comprenant une unité de production (1) pour la préparation de trichlorosilane, une autre unité (2) pour la préparation de monosilane par dismutation du trichlorosilane préparé dans l'unité (1) et une unité (3) pour la décomposition thermique du monosilane préparé en silicium et hydrogène, l'unité (1) comprenant
- au moins un réacteur d'hydrochloration, dans lequel le silicium peut être transformé avec du chlorure d'hydrogène avec obtention d'un mélange réactionnel contenant du trichlorosilane,
- au moins un réacteur de conversion, dans lequel le tétrachlorure de silicium peut être transformé avec du silicium et de l'hydrogène avec obtention d'un mélange réactionnel contenant du trichlorosilane,
- au moins un récipient collecteur, dans lequel les mélanges réactionnels contenant du trichlorosilane préparés peuvent être mélangés et entreposés et
- au moins un dispositif de séparation, qui est de préférence disposé en aval dudit au moins un récipient collecteur, dans lequel le mélange réactionnel contenant du trichlorosilane peut être séparé au moins partiellement en ses composants,
l'unité (2) comprenant
- au moins un réacteur de dismutation, dans lequel le trichlorosilane de l'unité (1) peut être transformé dans des conditions catalytiques en tétrachlorure de silicium et en un mélange réactionnel contenant du monosilane et
- au moins un dispositif de séparation, dans lequel les chlorosilanes peuvent être séparés du mélange réactionnel contenant du monosilane,
l'unité (3) comprenant
- au moins un réacteur de décomposition, dans lequel le monosilane de l'unité (1) peut être mis en contact avec au moins un support chauffé à 800°C-1450°C (température de surface),
où l'unité (2) est reliée à l'unité (1) via au moins une conduite de recyclage, via laquelle le tétrachlorure de silicium obtenu dans l'unité (2) peut être injecté dans ledit au moins un réacteur de conversion dans l'unité (1).

14. Installation selon la revendication 13, **caractérisée en ce que** ledit au moins un dispositif de séparation dans l'unité (1) est relié via au moins une conduite de recyclage audit au moins un réacteur de conversion dans l'unité (1), de telle sorte que le tétrachlorure de silicium séparé dans ledit au moins un dispositif de séparation dans l'unité (1) peut être injecté dans ledit au moins un réacteur de conversion dans l'unité (1).

15. Installation selon l'une quelconque des revendications 13 ou 14, **caractérisée en ce que** ledit au moins un dispositif de séparation dans l'unité (2) est relié via au moins une conduite de recyclage audit au moins un réacteur de dismutation dans l'unité (2), de telle sorte que les chlorosilanes séparés dans ledit au moins un dispositif de séparation dans l'unité (2) peuvent être injectés, en vue d'une nouvelle transformation, dans ledit au moins un réacteur de dismutation et **en ce que** ledit au moins un réacteur de décomposition dans l'unité (3) est relié via au moins une conduite de recyclage à l'unité (1), en particulier audit au moins un réacteur de conversion dans l'unité (1).
